# EUROPEAN PATENT APPLICATION

(11) **EP 3 034 203 A1**
(43) Date of publication of application: **22.06.2016**
(21) Application number: 14199118.2
(22) Date of filing: 19.12.2014
(51) Int. Cl.: B22F 3/105, C22C 1/04

(54) **Method for producing a metallic component**

(71) Applicant: ALSTOM Technology Ltd, 5400 Baden (CH)
(72) Inventor: Etter, Thomas, 5037 Muhen (CH); Engeli, Roman, 8050 Zürich (CH); Geiger, Fabian, 8500 Frauenfeld (CH)
(74) Representative: Bernotti, Andrea

(57) **Abstract**

A method for producing a metallic component (10) comprises the steps of first preparing a component (10) by means of an additive manufacturing process, and second exposing said manufactured component (10) to a heat treatment. Improved properties of the resulting component (10) are achieved by said heat treatment comprising a zone annealing (16) step.

## Description

### BACKGROUND OF THE INVENTION

The present invention relates to the technology of manufacturing metallic components for applications in a high temperature, high stress environment, for example in gas turbines. It refers to a method for producing a metallic component according to the preamble of claim 1.

### PRIOR ART

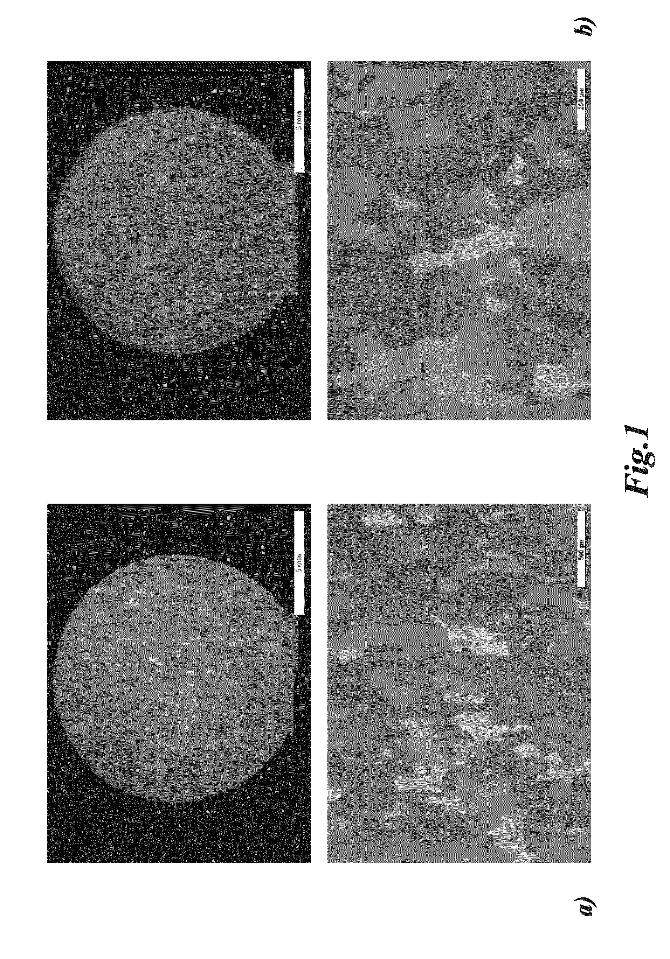

Standard re-crystallization heat treatments as described in different prior art documents can only increase the grain size of SLM (Selective Laser Melting) - processed alloys to a limited extend. As shown in exemplary Fig. 1 even a hold time of 9 hours at 1250°C (Fig. 1b) cannot further coarsen the grains in SLM-processed IN738LC compared to the "standard" re-crystallization heat treatment at 1250°C/3h (Fig. 1 a). Although the hold time at 1250°C is above the gamma prime (γ') solvus temperature and close to the solidus temperature of IN738LC, no abnormal grain growth was observed (compare lower pictures of Figs. 1a and 1b). Document EP 2 586 548 A1 relates to a component or coupon, which component or coupon is used in a thermal machine under extreme thermal and mechanical conditions, whereby said component or coupon is made of an alloy material with a controllable grain size, and is in service subjected to an expected temperature and/or stress and/or strain distribution, which varies with the geometrical coordinates of the component or coupon. The component or coupon is improved by having a grain size distribution, which depends on said expected temperature and/or stress and/or strain distribution such that the lifetime of the component is improved with respect to a similar component with a substantially uniform grain size.

Document EP 2 586 887 A1 relates to a method for manufacturing a component or coupon made of a high temperature superalloy based on Ni or Co or Fe or combinations thereof, comprising the steps of a) forming said component or coupon by means of a powder-based additive manufacturing process; and b) subjecting said formed component or coupon a heat treatment to optimize specific material properties. The material properties can be improved substantially and in a very flexible way by having said heat treatment taking place at higher temperatures compared to cast components/coupons.

Document EP 2 737 965 A1 refers to a method for manufacturing a three-dimensional metallic article/component entirely or partly, comprising the steps of a) successively building up said article /component from a metallic base material by means of an additive manufacturing process by scanning with an energy beam, thereby b) establishing a controlled grain orientation in primary and in secondary direction of the article /component, c) wherein the secondary grain orientation is realized by applying a specific scanning pattern of the energy beam, which is aligned to the cross section profile of said article /component, or with characteristic load conditions of the article/component.

Document EP 2 772 329 A1 refers to a method for manufacturing a hybrid component comprising the steps of a) manufacturing a preform as a first part of the hybrid component, then b) successively building up on that preform a second part of the component from a metallic powder material by means of an additive manufacturing process by scanning with an energy beam, thereby c) establishing a controlled grain orientation in primary and in secondary direction of at least a part of the second part of the component, d) wherein the controlled secondary grain orientation is realized by applying a specific scanning pattern of the energy beam, which is aligned to the cross section profile of said component or to the local load conditions for said component.

Thus, document EP 2 586 887 A1 proposes a method for recrystallization heat treatments of SLM-processed alloys, while documents EP 2 737 965 A1 and EP 2 772 329 A1 describe methods to control the primary and secondary crystallographic grain orientation of a part.

Other patents/documents describe the possibility to control the grain size by specific scanning strategies (e.g. EP 2 586 548 A1) and by using different laser beam sizes.

Further references are:
[1] R. L. Cairns, L. R. Curwick, and J. S. Benjamin, "Grain growth in dispersion strengthened superalloys by moving zone heat treatments," Metallurgical Transactions A, vol. 6, no. 1, pp. 179-188, Jan. 1975
[2] J. Li, S.. Johns, B. Iliescu, H. Frost, and I. Baker, The effect of hot zone velocity and temperature gradient on the directional recrystallization of polycrystalline nickel," Acta Materialia, vol. 50, no. 18, pp. 4491-4497, Oct. 2002
[3] EP 0 232 477 B1

Still, all these different methods are not able to produce a microstructure in SLM-processed alloys with grain sizes comparable to cast components. As a consequence, creep properties are still inferior to those of cast samples.

### SUMMARY OF THE INVENTION

It is an object of the present invention to teach a method for producing a metallic component by an additive manufacturing process, preferably an additive laser manufacturing process, which component has mechanical properties comparable to cast components made of the same resp. similar base material composition.

This and other objects are obtained by a method according to Claim 1.

According to the invention, a method for producing a metallic component comprises the steps of first preparing a component by means of an additive manufacturing process, especially a laser additive manufacturing process, and second exposing said manufactured component to a heat treatment, whereby said heat treatment comprises a zone annealing step as a first step. This means that the zone annealing takes place before an HIP treatment. The additive manufacturing process provides the driving force for the directional coarsening of said zone annealing step.

According to an embodiment of the invention said additive manufacturing process grows said component in a build-up direction, said zone annealing step comprises moving a heated annealing zone through said component along a zone annealing direction. As a preferred embodiment, said build-up direction and zone annealing direction are parallel to each other.

According to another embodiment of the invention said zone annealing is applied locally to predetermined areas of said component in order to get good creep properties in said predetermined areas.

According to a further embodiment of the invention the laser beam used during said laser additive manufacturing process is scanned in accordance with a specific scanning strategy, and a preferred grain orientation is induced in said component during said first step by said specific scanning strategy.

Specifically, said specific scanning strategy comprises a specific orientation of the laser scanner movement within the plane of molten material and/or a rotation of scan islands between different of said planes.

Specifically, an adjusted scanning strategy is used to control the primary and secondary crystallographic grain orientation during additive laser processing of the component, and an improved creep/TMF behavior of said component is achieved by a recrystallization through said additional zone annealing.

According to another embodiment of the invention said laser additive manufacturing process is an SLM process.

According to just another embodiment of the invention said heated annealing zone comprises molten material of said component.

According to a further embodiment of the invention said metallic component is built-up on single crystal or directionally solidified preforms.

According to a further embodiment of the invention said metallic component is made of a Ni-, Co-, Fe- or combinations thereof based superalloy, especially of a Ni-based alloy.

### BRIEF DESCRIPTION OF THE DRAWINGS

The present invention is now to be explained more closely by means of different embodiments and with reference to the attached drawings.
- Fig. 1: shows for comparison in Fig. 1 a and 1 b the effects of two different heat treatments at 1250°C for 3h (a) and 1250°C for 9h (b) on the microstructure of the component;
- Fig. 2: shows the orientation map from the interface between a SX substrate and an SLM sample with respect to build-up direction and laser scan direction;
- Fig. 3: shows the orientation map from the interface between a polycrystalline substrate and another SLM sample with respect to build-up direction and laser scan direction;
- Fig. 4: is an EBSD (Electron BackScatter Diffraction) map of an SLM-processed Ni-based superalloy sample showing a large amount of small angle boundaries within the grains, separated by high angle grain boundaries;
- Fig. 5: shows the fine structure of a sample, wherein the left part in the middle is the as-built zone and the right part in the middle is the heat affected area (zone annealed zone), the outer parts showing magnified pictured of these two defined areas;
- Fig. 6: shows the basic configuration during SLM build-up of a component and
- Fig. 7: shows the basic configuration during zone annealing of the SLM component.

### DETAILED DESCRIPTION OF DIFFERENT EMBODIMENTS OF THE INVENTION

The basic idea of the invention relates to a method of producing a metallic component realized by additive manufacturing technologies (preferably laser additive manufacturing technologies like for example SLM), where the component has improved creep and thermo mechanical fatigue properties compared to conventionally heat-treated components consisting of the same/similar base material composition. The improved creep/TMF behavior can be achieved by an adjusted scanning strategy to control the primary and secondary crystallographic grain orientation during SLM processing of the component and an additional zone annealing for recrystallization.

One drawback of powder-based additive manufacturing technology can be the significantly smaller grain size of such processed alloys compared to conventionally cast alloys with similar/same composition. However, by an appropriate control of the scanning and building strategy (e.g. orientation of the laser scanner movement within the plane, rotation of scan islands between the planes) in combination with a zone annealing, the anisotropy (inherent to powder-based additive manufacturing technology) can be controlled with significant advantage to the part life time (e.g. with respect to creep life). This is due to significant grain coarsening (recrystallization) during zone annealing.

The present solution bases upon the finding that by zone annealing a larger increase of the grain size of SLM processed alloys can be obtained than it is possible by standard recrystallization heat treatment. In addition, the combination of specific scanning strategies and zone annealing allows generating a coarse columnar-grained microstructure either with transverse isotropic properties or more preferably, with anisotropic properties. Zone annealing as described for example in documents in reference [1]-[3], for instance, results in microstructures with transverse isotropic properties (columnar grains have different orientations within a plane). By the combination described above, the resulting microstructure is comparable to a cast DS microstructure (for instance according to Bridgman process) but with controlled primary and secondary grain orientation. Due to the applied zone annealing the creep behavior is significantly improved in comparison to microstructures resulting from processes disclosed in documents EP 2 737 965 A1 and EP 2 772 329 A1 and exposed to standard re-crystallization heat treatment.

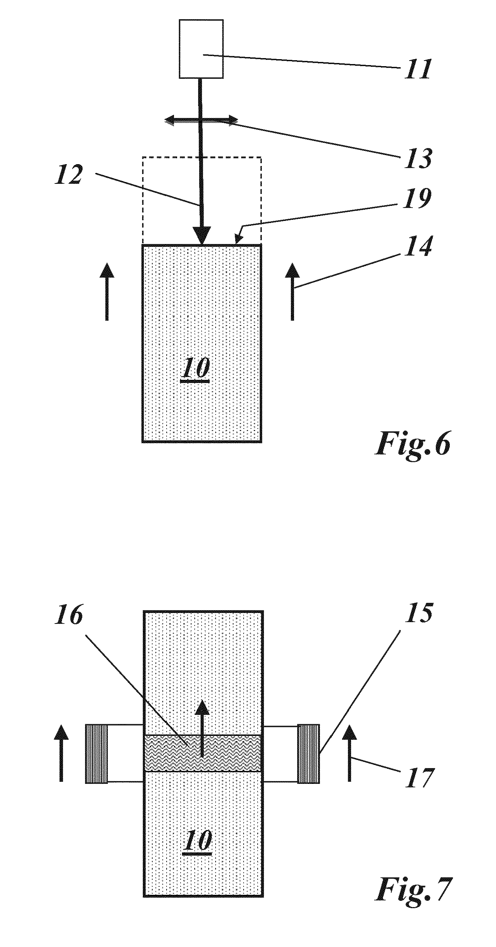

Basic manufacturing configurations for the method according to the invention are shown in Fig. 6 and 7.

Fig. 6 shows the basic configuration during SLM build-up of a component 10. The component is grown by successive melting of powder layers in a plane 19 of molten material, which is heated by a scanned laser beam 12 from a laser 11 in a certain scanning direction 13. Component 10 is in this way built-up along a build-up direction 14 vertical to said plane of 19 of molten material.

In a second step (Fig. 7), component 10 is (at least partially) annealed in a zone annealing process by moving a zone annealing apparatus 15, e.g. with r.f. power for inductive heating, relative to component 10 along a zone annealing direction 17. The resulting localized annealing zone 16 may comprise partly molten material. The zone melting can also be applied for built-up on SX/DX-preforms.

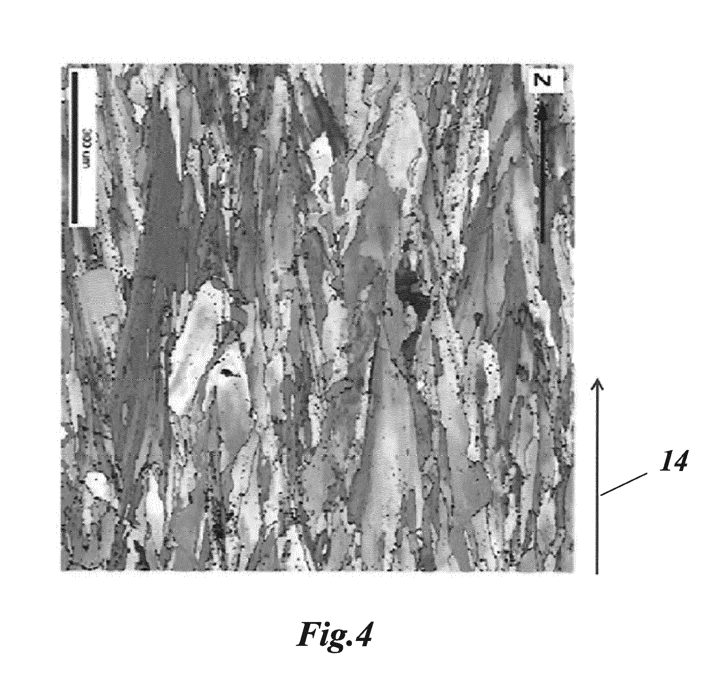

As described in reference [1] sufficient deformation energy from thermo mechanical processing is needed to overcome the barriers to grain growth in dispersion strengthened superalloys. However, in additive manufactured components no thermo-mechanical processing is needed due to the fact that the deformation energy in the as-built condition (high residual stresses induced by high cooling rates) is sufficient. Fig. 4 shows an EBSD (Electron BackScatter Diffraction) map in the as-built condition, i.e. without zone annealing, where 14 is the build-up direction. According to the EBSD map of Fig. 4, a lot of small angle boundaries can be identified, representing the driving force for recrystallization by reduction of the grain boundary area and reduction of the dislocation density.

The concept of controlling the primary and secondary grain orientation has already been described in EP 2 737 965 A1 and EP 2 772 329 A1. However, the combination of this concept with zone annealing gives new and surprising opportunities.

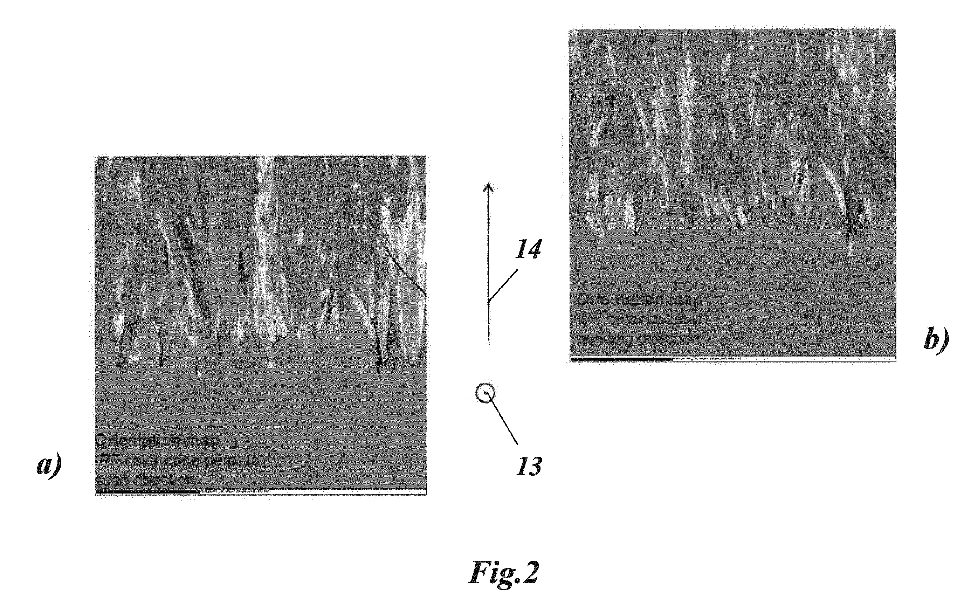

The primary crystallographic grain orientation in SLM-processed alloys for instance, is given by the build-up direction 14 (z-axis) and the secondary orientation is determined by the laser scanning direction 13 (see Figs. 2, 3, and 6).

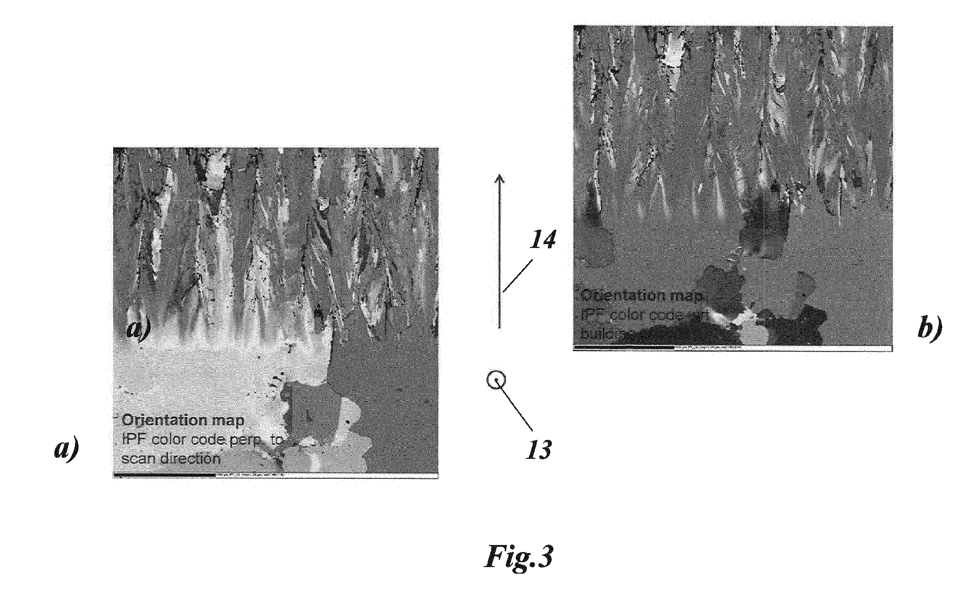

Furthermore, it is worth mentioning that the primary and secondary crystallographic orientation is independent from the substrate orientation as shown in EBSD mappings in Figs. 2 and 3. Fig. 2 shows the SLM build-up on an SX substrate with <011> orientation. It is shown that the <001> orientation of the build-up is along the build-up direction 14 and along the laser scanning direction 13 (which is perpendicular to the drawing plane).

The SLM-build up on an equiaxed substrate is shown in Fig. 3. Again, the <001> orientation of the build-up is along the build-up direction 14 and along the laser scanning direction 13. As a consequence, the desired build-up, resulting in fine and small-grained microstructures, can be realized on a SX, DS or CC preform/substrate material (see EP 2 737 965 A1 and EP 2 772 329 A1).

However, when applying standard heat treatment cycles (e.g. HIP (Hot Isostatic Pressing)/recrystallization heat treatment) the preferred crystallographic orientation is destroyed by recrystallization, resulting in equiaxed-type microstructure with isotropic properties.

However, by applying a zone annealing, the preferred grain orientation induced by specific scanning strategies can be significantly coarsen, comparable to typical DS (Directionally Solidified)-microstructures in cast blades, for example gas turbine blades, while the preferred grain orientation can be preserved.

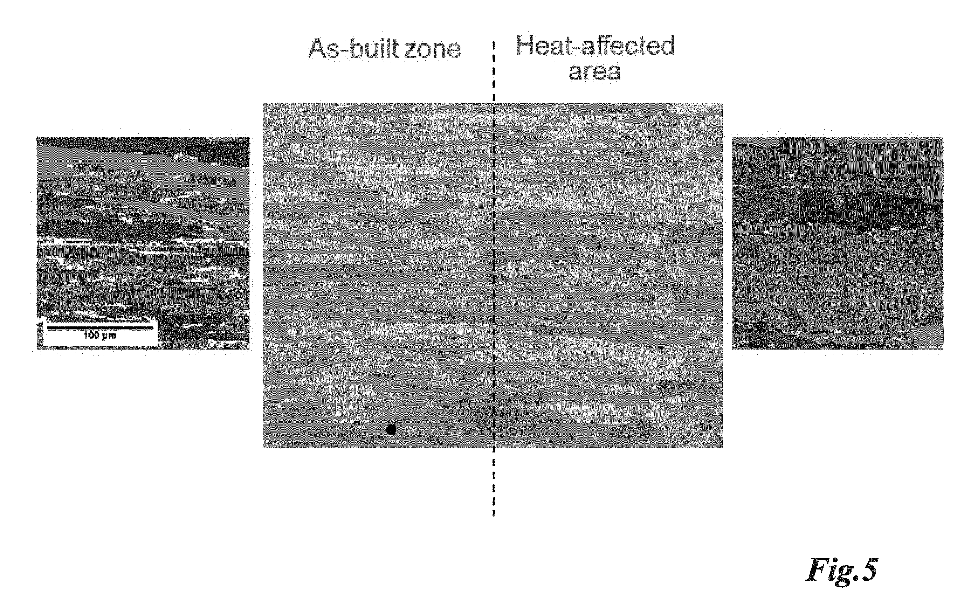

Fig. 5 gives an overview of the results of an exemplary process according to the invention.

It can be seen that the microstructure in the heat-affected area close to the partially molten zone is different compared to the "as-built" zone. It is interesting to note that the <001>-fibre texture along the build-up direction is maintained in the heat-affected area. In addition, grain coarsening (still with pronounced grain aspect ratio) occurred in the heat-affected area.

An additional benefit from zone annealing is the fact that it can be applied locally, especially in areas where good creep properties are essential.

The main advantage of the invention is that, while SLM-processed alloys exposed to standard heat treatment still have inferior creep behavior compared to conventionally cast alloys, the described method allows generating coarse columnar grains after SLM processing.

### LIST OF REFERENCE NUMERALS

- 10: component
- 11: laser
- 12: laser beam
- 13: scanning direction (laser)
- 14: build-up direction
- 15: zone annealing apparatus
- 16: annealing zone (e.g. partially molten)
- 17: zone annealing direction
- 18: SLM apparatus
- 19: plane (of molten material)

## Claims

1. Method for producing a metallic component (10), said method comprising the steps of first preparing a component (10) by means of an additive manufacturing process (11, 12, 13), and second exposing said manufactured component (10) to a heat treatment, **characterized in that** said heat treatment comprises a zone annealing step as a first step.

2. Method as claimed in Claim 1, **characterized in that** said additive manufacturing process (11, 12, 13) grows said component (10) in a build-up direction (14) and that said zone annealing step comprises moving a heated annealing zone (16) through said component along a zone annealing direction (17).

3. Method as claimed in Claim 2, **characterized in that** said build-up direction (14) and zone annealing direction are parallel to each other.

4. Method as claimed in Claim 1, **characterized in that** said zone annealing is applied locally to predetermined areas of said component in order to get good creep properties in said predetermined areas.

5. Method as claimed in Claim 1, **characterized in that** said additive manufacturing process is a laser additive manufacturing process.

6. Method as Claimed in Claim 5, **characterized in that**, that the laser beam (12) used during said laser additive manufacturing process (11, 12, 13) is scanned in accordance with a specific scanning strategy, and that a preferred grain orientation is induced in said component during said first step by said specific scanning strategy.

7. Method as claimed in Claim 6, **characterized in that** said specific scanning strategy comprises a specific orientation of the laser scanner movement within the plane (19) of molten material and/or a rotation of scan islands between different of said planes (19).

8. Method as claimed in Claim 6, **characterized in that** an adjusted scanning strategy is used to control the primary and secondary crystallographic grain orientation during additive laser processing of the component (10), and that an improved creep/TMF behavior of said component (10) is achieved by a recrystallization through said additional zone annealing.

9. Method as claimed in Claim 5, **characterized in that** said laser additive manufacturing process (11, 12, 13) is an SLM process.

10. Method as claimed in Claim 1, **characterized in that** said heated annealing zone comprises molten material of said component (10).

11. Method as claimed in Claim 1, **characterized in that** said metallic component is built-up on a single crystal or a directionally solidified preform.

12. Method as claimed in Claim 1, **characterized in that** said metallic component (10) is made of a Ni-, Co-, Fe- or combinations thereof based superalloy, especially of a Ni-based alloy.
